Europäisches Patentamt

European Patent Office

Office européen des brevets

(11) Veröffentlichungsnummer: **0 471 948 A2**

## EUROPÄISCHE PATENTANMELDUNG

(21) Anmeldenummer: **91110620.1**

(22) Anmeldetag: **27.06.91**

(51) Int. Cl.⁵: **H02H 9/06**, H01T 4/12

(30) Priorität: **24.08.90 DE 4026804**

(43) Veröffentlichungstag der Anmeldung:
**26.02.92 Patentblatt 92/09**

(84) Benannte Vertragsstaaten:
**BE DE FR GB IT**

(71) Anmelder: **DORNIER GMBH**
**Postfach 1420**
**W-7990 Friedrichshafen 1(DE)**

(72) Erfinder: **Stiehle, Hubert, Dipl.-Ing.**
**Alpenblickstrasse 46**
**W-7992 Tettnang(DE)**

(74) Vertreter: **Kasseckert, Rainer**
**DORNIER GMBH Kleeweg 3**
**W-7990 Friedrichshafen 1(DE)**

(54) **Transientenschutzschaltung.**

(57) Es wird eine Transientenschutzschaltung vorge-schlagen mit einem 3-Elektroden-Ableiter, dessen dritte Elektrode an Masse liegt und bei der der 3-Elektroden-Ableiter seriell zwischen Eingang (**E**) und Ausgang (**A**) angeordnet ist. Parallel zum Ableiter ist ein Verzögerungsglied vorgesehen. Für Doppelader-leitungen wird ein 5-Elektroden-Ableiter in verschie-denen Konfigurationen vorgeschlagen, der ebenfalls in einer Transientenschutzschaltung Verwendung fin-den kann.

Fig. 1

Die Erfindung betrifft eine Transientenschutzschaltung zum Ableiten von Überspannungspulsen, insbesonders für Datenleitungen mit hohen Übertragungsraten.

Bekannt sind Schaltungen, bei denen an der Strecke zwischen Eingang und Ausgang nacheinander Abzweigungen mit einem Gasableiter, mit einem Varistor und mit einer Schutzdiode, jeweils zur Masse, angeordnet sind. Der Gasableiter dient dem Grobschutz, weist ein hohes Ableitvermögen auf, spricht aber träge an. Der Varistor hat ein mittleres Ableitvermögen, spricht schnell an und senkt die Restspannung auf ein niedriges Niveau. Die Schutzdiode bietet den Feinschutz, spricht sehr schnell an, hat aber nur ein geringes Ableitvermögen. Nachteilig ist bei höheren Übertragungsfrequenzen die begrenzende Dioden- und Varistorkapazität. Nachteilig ist ebenfalls, daß die Diode wie alle Halbleiterbauteile bei Überlast zerstört werden kann.

Zum Überspannungsschutz bei doppeladrigen Leitern sind 3-Elektroden-Ableiter bekannt, die als Schutzelemente zwischen den beiden Adern nach Masse angeordnet sind. Die 3-Elektroden-Ableiter besitzen einen gemeinsamen Gasraum, der gleichzeitig ionisiert wird, wenn der Gasableiter nur von einer Hälfte gezündet wird, d. h. beide Hälften sind dann gleichzeitig niederohmig mit der Masse verbunden. Dieses gleichzeitige Durchzünden beider Hälften minimiert die Störspannungsanteile zwischen den Adern.

Aufgabe der Erfindung ist es, eine Transientenschutzschaltung vorzuschlagen, die kapazitätsarm und halbleiterfrei ist, und die dadurch besonders für hohe Nutzfrequenzen und Datenströme geeignet ist.

Diese Aufgabe wird erfindungsgemäß gelöst von einer Schaltung, bei der ein 3-Elektroden-Ableiter seriell zwischen Eingang und Ausgang angeordnet ist und parallel zu ihm ein Verzögerungsglied vorgesehen ist. Es können Phasen- und Laufzeitverzögerungsglieder zur Anwendung kommen. Auch die Verwendung von Verzögerungsleitungen, beispielsweise in Hochfrequenzkabeln, ist möglich.

Alternativ zur erfindungsgemäßen Anordnung bereits bekannter 3-Elektroden-Ableiter wird vorgeschlagen, einen 5-Elektroden-Ableiter zu verwenden. Ein 5-Elektroden-Ableiter in einem einzigen Bauteil ist bisher nicht bekannt geworden. Neben der ebenfalls in Serie vorgesehenen Anordnung in der Leitung, werden unterschiedliche Bauweisen vorgestellt, die die Realisierung eines 5-Elektroden-Ableiters ermöglichen. Damit ist eine erweiterte Schutzschaltung für Doppeladern möglich. Vorteilhafterweise ergeben sich dadurch ein niederer Schutzpegel für asymmetrische Transienten ("common mode") und gleichzeitig ein sehr niedriger Schutzpegel für symmetrische Restspannungen ("differential mode") an Doppeladern. Somit läßt sich eine weitere Reduktion an Bauteilen erzielen.

Die Erfindung wird anhand von Fig. näher erläutert.

Es zeigt:

Fig. 1 eine Skizze der erfindungsgemäßen Schutzschaltung für 3-Elektroden-Ableiter

Fig. 2 fünf Ausführungsbeispiele für einen Leiter

Fig. 3 sechs Ausführungsbeispiele für Zweileiteranordnung

Fig. 4 mögliche Bauformen des 5-Elektroden-Ableiters

Fig. 5 mögliche Schaltungssymbole für 5-Elektroden-Ableiter

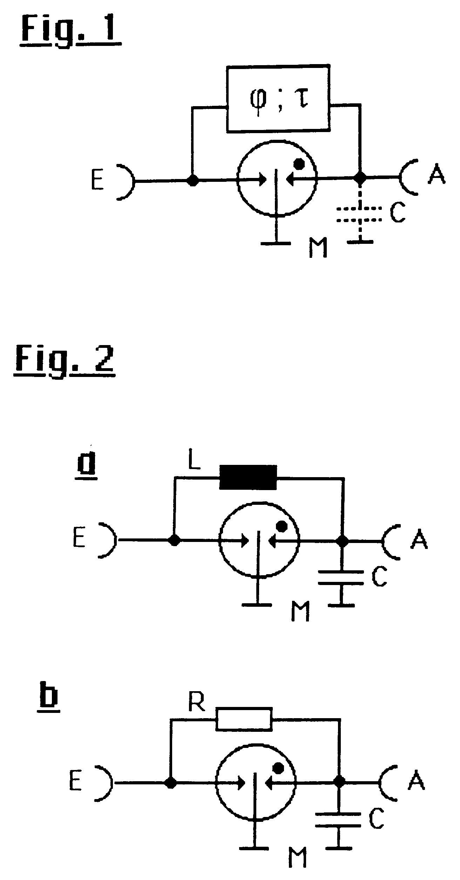

In Fig. 1 ist die erfindungsgemäße Transientenschutzschaltung dargestellt. Parallel zu einem in der Leitung befindlichen 3-Elektroden-Ableiter, wovon eine Elektrode an Masse **M**, eine am Eingang **E** und eine am Ausgang **A** liegt, ist ein Verzögerungsglied angeordnet. Das Verzögerungsglied kann eine Phasenverzögerung oder eine Laufzeitverzögerung bewirken. Zwischen Ausgang **A** und Masse **M** kann eine Kapazität **C** vorgesehen sein.

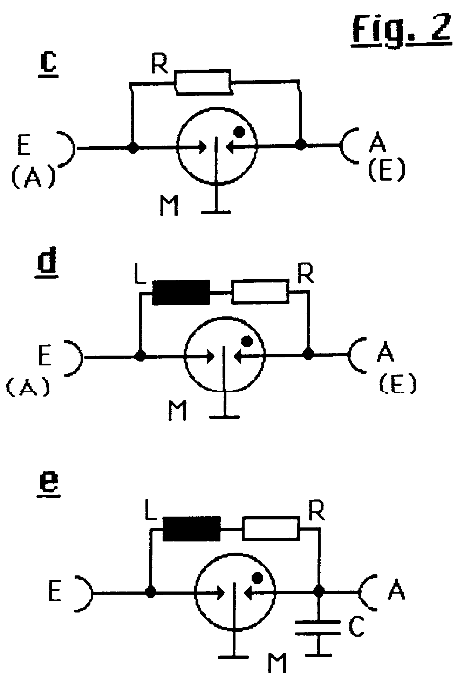

Die Fig. 2 zeigt fünf verschiedene Ausführungsbeispiele dieser Schaltung.

In Fig. 2a besteht das Verzögerungsglied aus einer Induktivität **L** parallel zum 3-Elektroden-Ableiter und einer Kapazität **C** zwischen Ausgang **A** und Masse **M**.

Das Beispiel in Fig. 2b zeigt ein Verzögerungsglied mit einem Widerstand **R** parallel zum 3-Elektroden-Ableiter und einer Kapazität **C** zwischen Ausgang **A** und Masse **M**.

Das dritte Ausführungsbeispiel in Fig. 2c zeigt einen Widerstand **R** als Verzögerungsglied parallel zum 3-Elektroden-Ableiter und Beispiel vier in Fig. 2d eine Reihenschaltung aus einer Induktivität **L** und einem Widerstand **R**, beide dann parallel zum 3-Elektroden-Ableiter. Die dritte und vierte Variante sind symmetrisch, das heißt Eingang **E** und Ausgang **A** können vertauscht werden. Das fünfte Ausführungsbeispiel in Fig. 2e schließlich zeigt ein Verzögerungsglied bestehend aus einer Reihenschaltung aus einer Induktivität **L** und einem Widerstand **R**, beide parallel zum 3-Elektroden-Ableiter, und einer Kapazität **C** zwischen Ausgang **A** und Masse **M**.

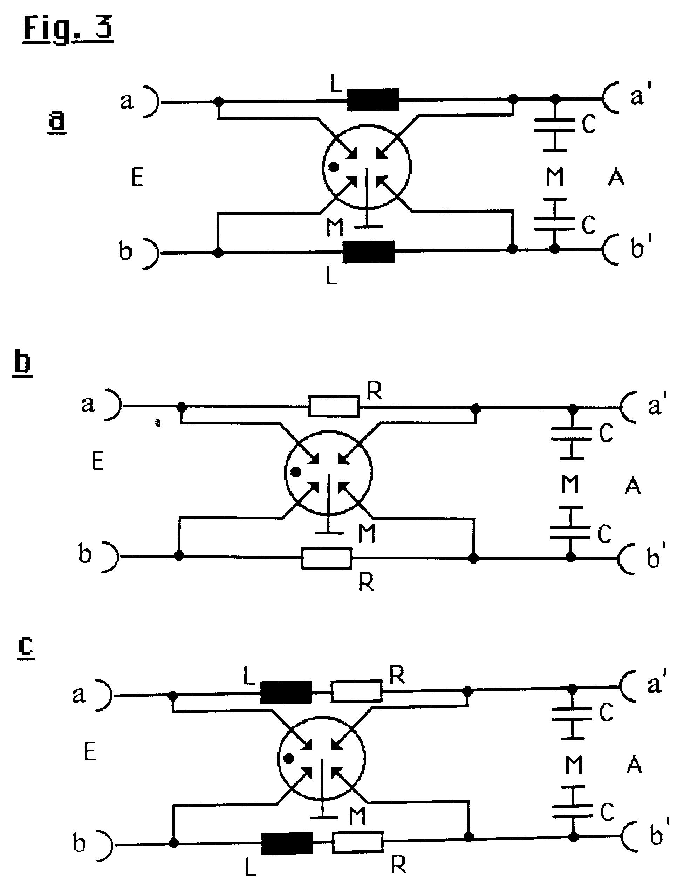

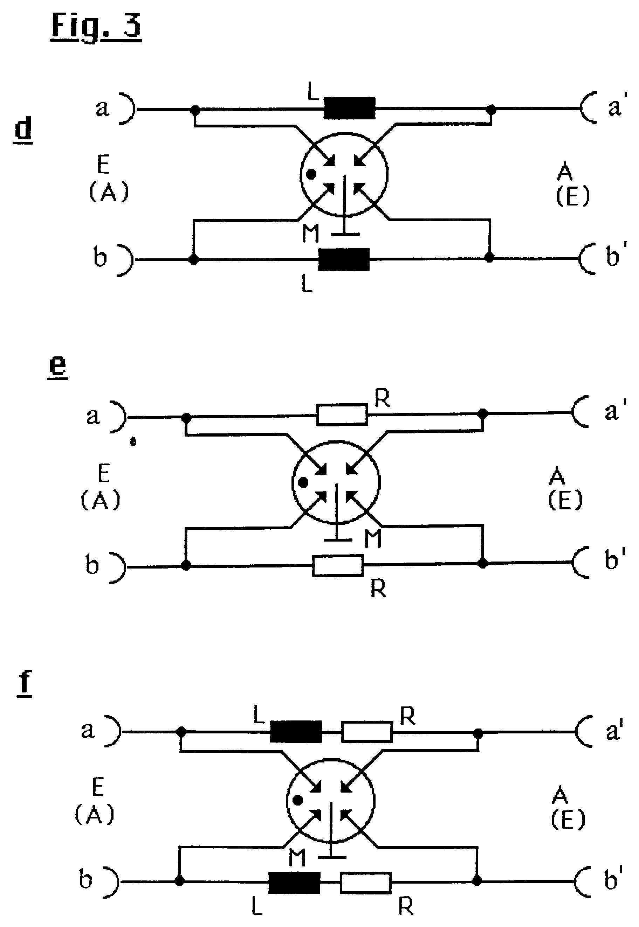

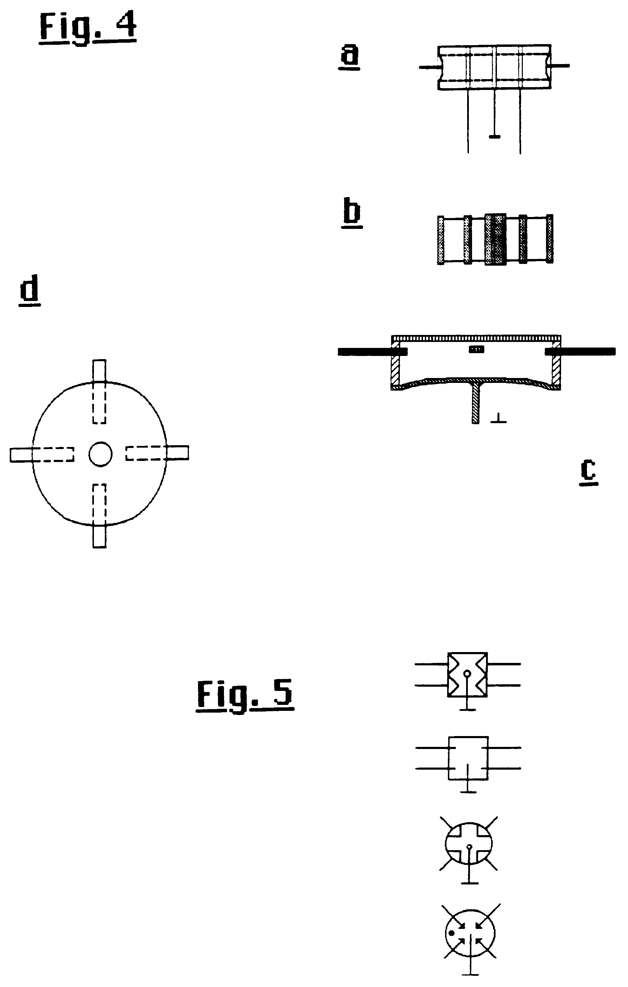

Fig. 3 zeigt sechs Ausführungsbeispiele, bei denen verschiedene Verzögerungsglieder parallel zu einem 5-Elektroden-Ableiter angeordnet sind. Während bei dem 3-Elektroden-Ableiter der Transientenschutz für einen Leiter vorgesehen war, läßt sich mit einem 5-Elektroden-Ableiter eine Schutzschaltung für zwei Leiter gleichzeitig realisieren. Das in den Schaltungen verwendete Schaltsymbol entspricht einer denkbaren Ausgestaltung. Ein Symbol entsprechend dem 3-Elektroden-Ableitersymbol wird zu normen sein. Mögliche Vorschläge dafür sind in Fig. 5 dargestellt.

Fig. 3a zeigt die Grundschaltung mit 5-Elektroden-Ableiter, an dem die Eingänge **a** und **b** und die Ausgänge **a'** und **b'** je Leiter und die Masse M angeschlossen sind. Das Verzögerungsglied besteht aus parallel dazu liegenden Induktivitäten **L** und Kapazitäten **C** zwischen den Ausgängen **a'** und **b'** und der Masse **M**.

Fig. 3b zeigt eine Variante, bei der das Verzögerungsglied aus parallel zu dem 5-Elektroden-Ableiter liegenden Widerständen **R** und Kapazitäten **C** zwischen den Ausgängen **a'** und **b'** und der Masse **M** besteht.

In Fig. 3c besteht die Verzögerungsleitung aus zwei Reihenschaltungen aus je einem Widerstand **R** und einer Induktivität **L**, wobei die Reihenschaltungen parallel zum 5-Elektroden-Ableiter liegen, und Kapazitäten **C** zwischen den Ausgängen **a'** und **b'** und der Masse **M**.

Die folgenden drei Varianten zeigen symmetrische Varianten, das heißt Eingang **E** und Ausgang **A** können vertauscht werden.

So zeigt Fig. 3d eine Variante, bei der das Verzögerungsglied aus Induktivitäten **L** parallel zum 5-Elektroden-Ableiter besteht und bei Fig. 3e besteht das Verzögerungsglied aus Widerständen **R** parallel zum Ableiter.

Fig. 3f zeigt als Verzögerungsglied zwei Reihenschaltungen aus je einem Widerstand **R** und einer Induktivität **L**, wobei die Reihenschaltungen parallel zum 5-Elektroden-Ableiter liegen.

Fig. 4 zeigt den möglichen Aufbau eines 5-Elektroden-Ableiters. Dabei zeigen Fig. 4a und Fig. 4b eine axiale Anordnung der Elektroden und Fig. 4c und Fig. 4d eine radiale Anordnung der Elektroden.

Die radiale Anordnung in Fig. 4a ist so vorzusehen, daß zu der Ausgangskonfiguration eines bekannten 3-Elektroden-Ableiters zwei zusätzliche Elektroden, entsprechend dem Masseanschluß des 3-Elektroden-Ableiters, angeordnet werden, wobei je eine zusätzliche Elektrode zwischen Eingang und Masse und die andere zusätzliche Elektrode zwischen Masse und Ausgang liegt. Masseelektrode und Außenelektroden könnten dann wie bei einem 3-Elektroden-Ableiter angeordnet sein. Die Elektroden ragen in einen gemeinsamen Gasraum, der von einem Keramik- oder Glaszylinder gebildet wird.

Fig. 4b zeigt einen derartig aufgebauten 5-Elektroden-Ableiter mit Ringelektroden mit Kontaktflächen, wie er sich vorteilhaft für den Einbau in einen Wechselhalter eignet.

Fig. 4c zeigt den Schnitt durch eine Bauform mit radialer Anordnung der Elektroden. dabei bildet die Masseelektrode eine Art kreisförmige Bodenfläche des Gasraumes, in den die anderen vier Elektroden jeweils vorzugsweise rechtwinklig hineinragen. Diese vier Elektroden sind durch Isolationsmaterial, beispielsweise Glas oder Keramik, geführt und gegenüber der Massenelektrode isolierend abgestützt.

Fig. 4d zeigt eine Aufsicht auf die radiale Anordnung. Diese runde Bauform eignet sich ideal für "Huckepack"-Drosseln, bei denen die kreisförmigen Drosseln auf dem Ableiter montiert werden können. Gegebenenfalls können Drossel und Ableiter zu einem Bauteil vergossen werden.

Die erfindungsgemäße Schaltung funktioniert wie folgt:

Ein am Eingang **E** einlaufender Störimpuls zündet den 3-Elektroden-Ableiter oder den 5-Elektroden-Ableiter und macht ihn zwischen Eingang **E** und Masse **M** sowie zwischen Ausgang **A** und Masse **M** niederohmig. Das Verzögerungsglied verzögert den Störimpuls zwischen Eingang **E** und Ausgang **A** bis zum Zünden des Ableiters. Der Restimpuls wird am Ausgang **A** stark bedämpft, das Schutzniveau wird bis auf die Bogenspannung gesenkt.

Die erfindungsgemäße Schutzschaltung kommt mit relativ wenigen Bauteilen aus; auf Schutzdiode und Varistor kann verzichtet werden. Die Schaltung ist halbleiterfrei, was die Defektanfälligkeit bei Überlast verringert. Der verwendete Gasableiter hat ein wesentlich höheres Ableitvermögen als die bisher verwendeten Schaltungen.

Die Schaltung ist kapazitätsarm und daher für hohe Nutzfrequenzen und Datenströme einsetzbar. Die Verzögerungsinduktivität kann bei symmetrischen Übertragungsleitungen kompensiert werden, beispielsweise durch stromkompensierte Drosseln für beide Übertragungszweige. Die Verzögerungskapazität kann Teil eines nachfolgenden Tiefpaßfilters sein.

## Patentansprüche

1. Transientenschutzschaltung mit einem 3-Elektroden-Ableiter, dessen dritte Elektrode auf Masse liegt, **dadurch gekennzeichnet,** daß der 3-Elektroden-Ableiter seriell zwischen Eingang (**E**) und Ausgang (**A**) angeordnet ist und parallel zu ihm ein Verzögerungsglied vorgesehen ist.

2. Transientenschutzschaltung nach Anspruch 1, **dadurch gekennzeichnet,** daß das Verzögerungsglied aus einer Induktivität (**L**) parallel zum 3-Elektroden-Ableiter und einer Kapazität (**C**) zwischen Ausgang (**A**) und Masse (**M**) besteht.

3. Transientenschutzschaltung nach Anspruch 1, **dadurch gekennzeichnet,** daß das Verzögerungsglied aus einem Widerstand (**R**) parallel zum 3-Elektroden-Ableiter besteht.

4. Transientenschutzschaltung nach Anspruch 1, **dadurch gekennzeichnet,** daß das Verzögerungsglied aus einer Reihenschaltung aus einer Induktivität (**L**) und einem Widerstand (**R**) besteht, wobei die Reihenschaltung parallel zum 3-Elektroden-Ableiter angeordnet ist.

5. Transientenschutzschaltung nach Anspruch 1, **dadurch gekennzeichnet,** daß das Verzögerungsglied aus einem Widerstand (**R**) parallel zum 3-Elektroden-Ableiter und einer Kapazität (**C**) zwischen Ausgang (**A**) und Masse (**M**) besteht.

6. Transientenschutzschaltung nach Anspruch 1, **dadurch gekennzeichnet,** daß das Verzögerungsglied aus einer Reihenschaltung aus einer Induktivität (**L**) und einem Widerstand (**R**) und aus einer zwischen Ausgang (**A**) und Masse (**M**) vorgesehenen Kapazität (**C**) besteht, wobei die Reihenschaltung parallel zum 3-Elektroden-Ableiter angeordnet ist

7. Transientenschutzschaltung nach Anspruch 1, **dadurch gekennzeichnet,** daß das Verzögerungsglied bei Hochfrequenzkabeln aus einer Verzögerungsleitung besteht.

8. Transientenschutzschaltung für eine Doppeladerleitung, **dadurch gekennzeichnet,** daß ein 5-Elektrodenableiter, bei dem eine Elektrode an Masse liegt, je eine Elektrode am Eingang jeder Ader und je eine Elektrode am Ausgang jeder Ader vorgesehen ist, seriell zwischen Eingang (**E**) und Ausgang (**A**) angeordnet ist und parallel zu ihm ein Verzögerungsglied vorgesehen ist.

9. Transientenschutzschaltung nach Anspruch 8, **dadurch gekennzeichnet,** daß das Verzögerungsglied aus zwei Induktivitäten (**L**) parallel zum 5-Elektroden-Ableiter und zwei Kapazitäten (**C**) zwischen den Ausgängen (**a', b'**) und Masse (**M**) besteht.

10. Transientenschutzschaltung nach Anspruch 8, **dadurch gekennzeichnet,** daß das Verzögerungsglied aus zwei Widerständen (**R**) parallel zum 5-Elektroden-Ableiter besteht.

11. Transientenschutzschaltung nach Anspruch 8, **dadurch gekennzeichnet,** daß das Verzögerungsglied aus zwei Induktivitäten (**L**) parallel zum 5-Elektroden-Ableiter besteht.

12. Transientenschutzschaltung nach Anspruch 8, **dadurch gekennzeichnet,** daß das Verzögerungsglied aus zwei Reihenschaltungen mit je einer Induktivität (**L**) und je einem Widerstand (**R**) besteht, wobei die Reihenschaltung parallel zum 5-Elektroden-Ableiter angeordnet ist.

13. Transientenschutzschaltung nach Anspruch 8, **dadurch gekennzeichnet,** daß das Verzögerungsglied aus zwei Widerständen (**R**) parallel zum 5-Elektroden-Ableiter und zwei Kapazitäten (**C**) zwischen den Ausgängen (**a', b'**) und Masse (**M**) besteht.

14. Transientenschutzschaltung nach Anspruch 8, **dadurch gekennzeichnet,** daß das Verzögerungsglied aus zwei Reihenschaltungen mit je einer Induktivität (**L**) und je einem Widerstand (**R**) und aus zwei Kapazitäten (**C**) zwischen den Ausgängen (**a', b'**) und Masse (**M**) besteht, wobei die Reihenschaltungen parallel zum 5-Elektroden-Ableiter angeordnet sind.

15. Transientenschutzschaltung nach Anspruch 8, **dadurch gekennzeichnet,** daß das Verzögerungsglied bei Hochfrequenzkabeln aus zwei Verzögerungsleitungen parallel zum 5-Elektroden-Ableiter besteht.

16. Überspannungsableiter, **gekennzeichnet** durch
    - einen Hohlzylinder aus isolierendem Material,
    - zwei die Verschlüsse des Hohlzylinders bildende Elektroden,
    - einen zwischen Zylinderwand und Verschlüssen gebildeten Gasraum,
    - einer zwischen diesen Elektroden angeordneten dritten Elektrode, die dem Masseanschluß dient und ringförmig in der Zylinderwand derart angeordnet ist, daß sie gegenüber den beiden anderen Elektroden isoliert ist und
    - zwei weiteren ringförmig in der Zylinderwand angeordneten Elektroden, die derart angeordnet sind, daß je eine zwischen der Masseanschlußelektrode und einer verschlussbildenden Elektrode sich befindet und daß alle Elektroden Kontakt zum Gasraum haben und untereinander isoliert sind.

17. Überspannungsableiter, **gekennzeichnet** durch
    - einen Hohlzylinder aus isolierendem Material,
    - eine einen Verschluss des Hohlzylinders bildende Elektrode, die dem Masseanschluß dient,
- einen zweiten Verschluss des Hohlzylinders,
- einen zwischen Zylinderwand und Verschlüssen gebildeten Gasraum,
- vier in der Hohlzylinderwand vorzugsweise rechtwinklig zueinander angeordneten Elektroden, die Kontakt zum Gasraum haben und untereinander und gegenüber der Masseanschlußelektrode isoliert sind.

18. Überspannungsableiter nach Anspruch 17, **dadurch gekennzeichnet,** daß die Massanschlußelektrode in den Gasraum hinein gewölbt ist.

19. Überspannungsableiter nach einem der Ansprüche 16 bis 18, **dadurch gekennzeichnet,** daß das isolierende Material Glas ist.

20. Überspannungsableiter nach einem der Ansprüche 16 bis 18, **dadurch gekennzeichnet,** daß das isolierende Material Keramik ist.

# Fig. 1

# Fig. 2

Fig. 2

# Fig. 3

# Fig. 3

# Fig. 4

**a**

**b**

**d**

**c**

# Fig. 5